# EUROPEAN PATENT APPLICATION

(11) **EP 4 793 820 A1**
(43) Date of publication of application: **19.08.2026**
(21) Application number: 26159127.5
(22) Date of filing: 17.02.2026
(51) Int. Cl.: G06F 40/47, G06F 40/58

(54) **DATA PROCESSING DEVICE, SYSTEM AND METHOD FOR CONVERTING DATA IN A CRISIS SITUATION**

(30) Priority: 17.02.2025 WO PCT/TR2025/050047
(71) Applicant: Karaman, Burcu Ilkay, 35580 Izmir (TR)
(72) Inventor: Karaman, Burcu Ilkay, 35580 Izmir (TR)
(74) Representative: Mathys & Squire

(57) **Abstract**

The present invention relates to a data processing device (100) for converting data in a crisis situation. The data processing device (100) comprises a device database (110) with data entries (111), a data entry interface (120) for entering search data (SD) relating to at least one of the data entries (111), and a data conversion module (130) for converting the search data (SD) into a corresponding term, whereby the term is stored in different languages in one of the data entries (111). For the data conversion, the data conversion module (130) determines a conceptual representation (1302) of the entered search data (SD) and retrieves at least one of the data entries (111) from the device database (110) based on an equivalence (LEQ) between the determined conceptual representation (1302) of the search data (SD) and a prescribed conceptual representation (1112) stored in one of the data entries (111). The data processing device (100) further comprises a data output interface (140) for outputting the term from the at least one retrieved data entry (111) in at least one of the languages (TL).

## Description

The present invention relates to a data processing device for converting data in crisis situations, which comprises an input interface, an output interface and a device database. The invention relates further to a data processing system and a data processing method.

Crisis situations, such as earthquake, fire, flood, and similar natural disasters, mining collapses, epidemics, and all types of societal crises, present technological challenges for data processing applications. Generally available resources, such as electricity and communication networks, may be overstretched, limited or even completely unavailable during crisis situations. These conditions place technical restrictions and limitations on the capabilities and functionalities of existing data processing applications and necessitate reconsideration of known designs.

In the following, this topic is discussed in more detail, using an illustrative example that relates to data processing for facilitating communication after an earthquake:
Using standardised language in the aftermath of earthquakes and similar disaster scenarios is essential. The response to an earthquake involves the cooperation between different agencies, humanitarian organisations, international rescue teams and international medical teams. Each of these groups will use different languages and terminology, which may cause misunderstanding and miscommunication, and ultimately may lead to wasted time and efforts or even dangerous situations. The 2023 Kahramanmara 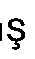 and Hatay earthquakes in Turkey highlighted the challenges posed by language barriers in coordinating international disaster relief efforts and communicating with affected populations.
For these reasons, organizations, like the United Nations, work on a consistent standard emergency terminology so responders and interpreters worldwide are aligned. However, access to this standard emergency terminology during a crisis situation, like an earthquake, is typically largely restricted. In the past, interpreters and responders were able to access the following resources for facilitating or improving crisis communication:
   - Shared online files, like a Google Drive file in Excel format, listing crisis-related terms.
   - Multilingual general-purpose dictionaries, such as Tureng (a Turkish-English dictionary). However, general-purpose dictionaries lack definitions and contextual information. Furthermore, general-purpose dictionaries provide only equivalents for words as an item of language for general purposes in a given target language but not as terms, i.e. as an item of language of specific purpose. Often, additional searches were required in case terms were not listed or equivalents were found unsatisfactory.
   - Online word searches (e.g. via Google). These are often used if no results were found in the general-purpose dictionaries or to verify or supplement information obtained from general-purpose dictionaries.
   - Online image searches. These are often used if the online word searches fail to yield satisfactory equivalents. This allowed the parties involved to visually represent search terms and convey meanings effectively. However, like any online search, this resource is reliant on the availability of an internet connection, which often does not exist in areas affected by earthquakes or other crises.
Another challenge can be found in the complexity, variety and heterogeneity of crisis terminology. Crisis terminology encompasses various fields, including: medical sciences; emergency medicine; public health emergencies; medical devices; the pharmaceutical industry; nursing; mechanical engineering; public safety; security and safety; working conditions; electronics and electrical engineering; earthquake engineering/seismic or seismological terminology; civil engineering (structural terminology); geophysics engineering; disaster psychiatry; disaster law (disaster risk reduction; disaster preparedness and response; disaster recovery process; international disaster response law; protection, gender, and inclusion; public health emergencies); disaster sociology/sociological disaster research; disaster psychology; search and rescue equipment; disaster risk, crisis, and resilience management; emergency and disaster management; migration and refugees. In addition, crisis-related terms found in global term banks are often scattered and thus, require harmonisation.
Interviews with formerly deployed crisis interpreters revealed that in practice, interpreters are often provided with a printed Excel table containing over 400 terms translated into 30 languages. This list is distributed in both physical and digital formats. However, it is evident that using printed term lists under time constraints is impractical. Given the vast scope of crisis terminology, it is unrealistic to expect crisis interpreters to memorise all relevant terms.
The example of the communication after an earthquake illustrates that known crisis communication technology fails to work both online and offline, to integrate terms from multiple domains, and to serve as an umbrella application by aggregating different term bank structures. As a result, there is a need for a solution that overcomes the limitations and disadvantages of known technology for crisis situations, such as earthquakes.

The above example highlights the challenges of data accessibility, data availability and data consistency in crisis situations, particularly when critical infrastructure, such as internet access, is limited. It also illustrates the importance of ensuring that data processing systems and data processing devices are adaptable to heterogeneous data inputs. Furthermore, it underscores the need for a data conversion that is time- and energy-efficient as well as semantically reliable, especially under the constraints typical for such crisis scenarios.

Therefore, there is a need for a solution that overcomes the limitations and disadvantages of known technology for crisis situations, such as earthquakes. In particular, it is an objective of the present invention to provide a data processing solution that allows efficient and reliable offline data conversion of circumstantial data into corresponding prescribed language data.

The above technical object is solved by a data processing device according to claim 1, a data processing system according to claim 12, a data processing method according to claim 13, and a computer program product according to claim 15.

Further advantages and features of the invention are apparent from the dependent claims, the description and the drawings. Naturally, the features and details described in connection with the data processing device according to the invention also apply in connection with the data processing system according to the invention, the data processing method according to the invention and the computer program product according to the invention, and vice versa, so that mutual reference is or can be made to the disclosure of the individual aspects of the invention.

A first aspect of the invention relates to a data processing device for converting data in a crisis situation. The data processing device comprises a device database with data entries. Each of the data entries comprises term data with at least two corresponding prescribed terms in different languages, and a prescribed conceptual representation of the term data. The data processing device comprises a data entry interface for entering search data relating to at least one of the data entries. The data processing device further comprises a data conversion module for converting the search data into a corresponding term. Therein, the data conversion module is configured to determine a conceptual representation of the entered search data based on the entered search data. The data conversion module is further configured to retrieve at least one of the data entries from the device database based on an at least partial equivalence between the determined conceptual representation of the search data and the prescribed conceptual representation of the at least one of the data entries. The data processing device further comprises a data output interface for outputting the term data of the at least one retrieved data entry in at least one of the languages.

In the context of this invention, a *"data processing device"* may be understood, for example, as an apparatus or device with the ability to receive, process and output data according to defined rules or instructions. For example, the data processing device may be a mobile device, such as a mobile phone, smartphone, tablet or a laptop. Moreover, *"converting data"* may be understood, for example, as the process of changing data from one form or representation to another, while preferably preserving the concept of the original data. Further, a *"crisis situation"* may be understood, for example, as a situation characterized by severe disruptions to everyday life, which are typically accompanied by imminent dangers to life and a high degree of urgency requiring fast action to mitigate the adverse circumstances arising in this situation. For example, in the context of this invention, a crisis situation may be any situation involving an earthquake, fire, flood, sudden ground movements, snow avalanches, debris avalanches, and/or other or similar natural and/or human-caused disasters.

More specifically, the data processing device of the invention converts search data supplied via a data entry interface into corresponding term data from a device database, and the converted data is output via a data output interface.

Therein, *"interface"* may be understood, for example, as an interconnection point for receiving and/or exchanging data. For instance, the data entry interface and/or the data output interface may be a graphical user interface (GUI), an application programming interface (API), or a physical or virtual communication port.

The device database comprises data entries, which comprise at least term data and a prescribed conceptual representation of the term data. The term data comprises at least two corresponding prescribed terms in different languages.

Therein, *"data entries"* may be understood, for example, as data structures, clusters, and/or data with an underlying data model. The *"term data"* may be understood, for example, as data relating to data with human intelligible content. The *"terms"* included in the term data may be one or more signs, symbols, formulae, abbreviations, letters, words, multi-words, phrases, and/or expressions, preferably each with a precise definition. For instance, term data may comprise terms as an item of language for specific purposes.

Further, a *"conceptual representation of the term data"* may be understood, for example, as an abstract, semantically defined unit of meaning that represents a real-world entity or idea. For example, the terms "tent" or "container", may be encompassed by a conceptual representation of "providing temporary shelter". A conceptual representation may be derived in various ways, which may include the use of tables comprising detailed data about the semantics of individual words or combinations of words, sounds or images, as well as the use of large language models or of artificial intelligence systems to process such data as further described below. Alternatively or additionally, an ontology or knowledge-graph approach may be used, whereby concepts may be modelled as clearly defined categories, organized in a hierarchy, and explicitly defined by their essential characteristics and relationships to other concepts. The conceptual representation may be derived, for instance, in a text-based form with a prescribed language, for example in a source language (e.g. the language used by the user), in a target language (e.g. the language of interest) and/or in an intermediate language (neither language used for search nor the language intended to be used for an interaction).

This design of providing a conceptual representation of the term data in each data entry allows to organize and search the data entries in the device database based on what the respective data semantically represents rather than the computational "value" of the individual data stored in each data entry. Thereby, it is possible to search the database for a concept rather than individual terms. For example, instead of querying the database for individual synonyms, direct translations or colloquial equivalents of a search term, the underlying concept of the search term can be searched in the device database. Thereby, the number of data value comparisons can be significantly reduced since a word-by-word comparison for each data entry is obsolete. Also, response times to data queries can be significantly shortened. Additionally, it is possible to provide the device database with a comprehensive amount of data entries without having to provide a high number of synonyms to find a data entry based on a 1:1 match with the search data. This reduces the memory usage needed for each data entry and thus, allows to store a larger number of different terms and concepts within the data processing device. Accordingly, the data processing device can operate reliably without requiring access to online resources. Thus, offline operation can be ensured.

The data processing device further comprises a data conversion module for converting the search data into a corresponding term from the term data. For this, the data conversion module is configured to determine a conceptual representation of the entered search data based on the entered search data. Furthermore, the data conversion module is configured to retrieve at least one of the data entries from the device database based on an at least partial equivalence between the determined conceptual representation of the search data and the prescribed conceptual representation of the at least one of the data entries.

In the context of this invention, *"equivalence"* may be understood, for example, as a measure of how closely two or more conceptual representations are matched. For example, the conceptual representations may be matched according to ISO/TC 37 standards. For example, equivalence may be numerically determined as an equivalence level, such as a percentage. For instance, equivalence may be computed by comparing overlaps or distances between conceptual representations.

For instance, equivalence may be calculated based on a weighing of different conceptual aspects, such as concept meaning, concept attributes and concept relationships. For example, a first conceptual representation may relate to "shelter" with the attribute of "capacity for up to 20 persons" and a functional relationship "evacuees". A second conceptual representation may relate to "community centre" with the attribute of "capacity for up to 40 persons" and a functional relationship "evacuees". In this example, the weighing factors for the attribute and the relationship may be chosen high due to their relative closeness and at least partial overlap. A numerical value for the level of equivalence between both conceptual representations may be determined by summing the weighted contribution of each aspect. For instance, the following formula may be used: $\begin{matrix}Equivalence = {weight}_{1} ⋅ {contribution}_{semantic meaning} + {weight}_{2} ⋅ {contribution}_{attribute} \\ + {weight}_{3} ⋅ {contribution}_{relationship}\end{matrix}$

Weights may have a value between 0 (no match) to 1 (identical).

The contributions c... may have a value between 0 (no contribution) to 1 (high contribution) and add to a total of 1. For instance: C_{semantic meaning} =0.5; C_{attribute} =0.3; c ᵣₑₗₐₜᵢₒₙₛₕᵢₚ=0.2.

The values for the contributions and the weights may be determined in correspondence with the database and the requirements of the application.

In other words, the data conversion module is able to derive a semantic meaning of the search data and to utilize the so derived conceptual representation for making queries to the device database. Thereby, the search data can be decoupled from the term data stored in the device database and hence, the data processing device is flexible and adaptable in relation to the supplied user input since it can function with various data inputs.

The invention thus provides a data processing device with the ability to autonomously, efficiently, and reliably convert input data into corresponding prescribed output data, and to operate and function in crisis situations.

According to a preferred embodiment, the data entries of the device database may relate to a specific crisis situation.

Thereby, information can be retrieved that is most suitable to a current crisis situation. In addition, it can be ensured that there is a close match between probable search data and the conceptual representations of the data entries.

According to a further preferred embodiment, the data entries may further comprise video data, image data, sound data, and/or text data, which is mapped to the respective prescribed conceptual representation of the term data. Preferably, the conceptual representation and/or the term data of the data entries may be video data, image data, sound data, and/or text data, which is mapped to the respective prescribed conceptual representation of the term data.

Thereby, information can be stored and retrieved in a variety of different data formats from the device database.

According to a preferred embodiment, the data entry interface may be configured to enter the search data in at least one of a plurality of data formats. For instance, the search data may comprise video data, image data, sound data, and/or text data.

Thereby, the usability of the data processing device can be improved. Furthermore, the search data can be provided with different amounts of information layers. For instance, image or video data may include more information about the context of a search term compared to purely textual data.

According to a further preferred embodiment, the data processing device may further comprise a content extraction section, which is configured to identify and extract one or more content components from the entered search data and which is configured to provide the content components as content data. The conceptual representation of the entered search data may be determined based on the content data from the search data. Preferably, the content extraction section may be configured to apply techniques of image segmentation and/or semantic parsing for identifying and extracting the content components for the content data.

According to a preferred embodiment, the conceptual representation of the entered search data may be determined by mapping the content components to one or more of the prescribed conceptual representations. Preferably, the mapping may depend on an equivalence between at least parts of the content data and at least some of the data entries.

According to a further preferred embodiment, the data conversion module may comprise a artificial intelligence section, which comprises an input for receiving the search data and which comprises an output for outputting at least one determined conceptual representation. Preferably, the artificial intelligence section may be configured to dynamically map the search data to the prescribed conceptual representations. The artificial intelligence section may comprise an artificial intelligence model trained to associate the search data with one or more prescribed conceptual representations from the device database. Preferably, the prescribed conceptual representations may be based on data received from one or more reference databases.

According to a preferred embodiment, the conceptual representation of the entered search data may be further determined based on crisis situation data that relates to contextual constraints defined by a specific crisis situation.

With each of the above configurations, the conceptual representation of the entered search data can be determined accurately and efficiently.

According to a further preferred embodiment, the data output interface may be configured to present the retrieved term data in at least one of a plurality of output modes. Preferably, the output modes may comprise video, image, sound and/or text.

Thereby, the converted data can be output in various ways so that a multimodal interaction can be achieved.

Preferably, the data output interface may be provided separate or integral with the data entry interface. For instance, they may be integral parts of the same user interface.

According to a preferred embodiment, the data processing device may further comprise a communication network interface for exchanging communication data over a communication network. The communication network interface may be communicatively coupled to the data entry interface, the data output interface, and/or the device database.

According to a further preferred embodiment, the data entry interface may be further configured to transmit a data request to at least one external resource via the communication network interface. The data request may be based on the entered search data. Furthermore, the data output interface may be configured to receive external term data from the at least one external resource. The external term data may relate to the data request.

According to a preferred embodiment, the device database may be configured to transmit a data request to external resources. Therein, the data request may be based on the entered search data. The device database may be further configured to receive external term data for verifying, supplementing and/or consolidating the term data stored in the device database.

This allows to access multiple heterogeneous external terminology databases via the data processing device and to consolidate or verify the database entries with corresponding entries in the external terminology databases.

A further aspect of the present invention relates to a data processing system for converting data in a crisis situation. The data processing system comprises the above described data processing device and at least one or more external resource, which are communicatively coupled to the communication network interface of the data processing device via a communication network.

The data processing system allows to utilize and access external terminology databases for verifying, improving and enlarging the device database. Furthermore, it is possible to revert to the external terminology databases in case search terms are not found in the device database.

A further aspect of the present invention relates to a data processing method for converting data in a crisis situation. The data processing method comprises a step of providing a device database with data entries, of which each comprises term data with at least two corresponding prescribed terms in different languages, and a prescribed conceptual representation of the term data. Further, in the data processing method, search data relating to at least one of the data entries is entered. The search data is converted into a corresponding term by determining a conceptual representation of the entered search data based on the entered search data, by further determining an equivalence between the determined conceptual representation of the search data and the prescribed conceptual representation of at least some of the data entries, and by retrieving the at least one of the data entries from the device database for which at least partial equivalence was determined. The term data of the at least one retrieved data entry is outputted in at least one of the languages.

According to preferred embodiments, the data processing method may further comprise one or more steps to perform the functions of the data processing device described above.

A further aspect of the present invention relates to a computer program product comprising instructions which, when the program is executed by a computer, cause the computer to carry out the steps of the above described data processing method.

The computer program product may be implemented as computer-readable instruction code in any suitable programming language, such as JAVA or C++. The computer program product may be stored on a computer-readable storage medium, such as a data disk, removable drive, volatile or non-volatile memory, or built-in memory/processor. The instruction code can program a computer or other programmable devices, such as control devices, in such a way that the desired functions are performed. Furthermore, the computer program product can be or is provided in a network, such as the Internet, from which it can be downloaded by a user as needed. The computer program product can be implemented by means of a computer program, i.e., software, as well as by means of one or more special electronic circuits, i.e., hardware, or in any hybrid form, i.e., by means of software components and hardware components.

A further aspect of the present invention relates to a computer-readable storage medium comprising instructions which, when executed by a computer, cause the computer to carry out the steps of the above described data processing method.

With each of these aspects the same advantages and technical effects can be derived that are outlined in detail above for the data processing device of the invention.

Further advantages, features and details of the invention become apparent from the following description, in which embodiments of the invention are described in detail with reference to the following figures.
- **Figure 1**: shows a schematic illustration of an embodiment of a data processing device and data processing system according to the present invention.
- **Figure 2**: shows a schematic illustration of an embodiment of a data processing method according to the present invention.
- **Figure 3**: shows a schematic illustration of an embodiment of a data structure for organising data in a device database according to the present invention.
- **Figure 4**: shows a schematic illustration of a further embodiment of a data processing device and data processing system according to the present invention.

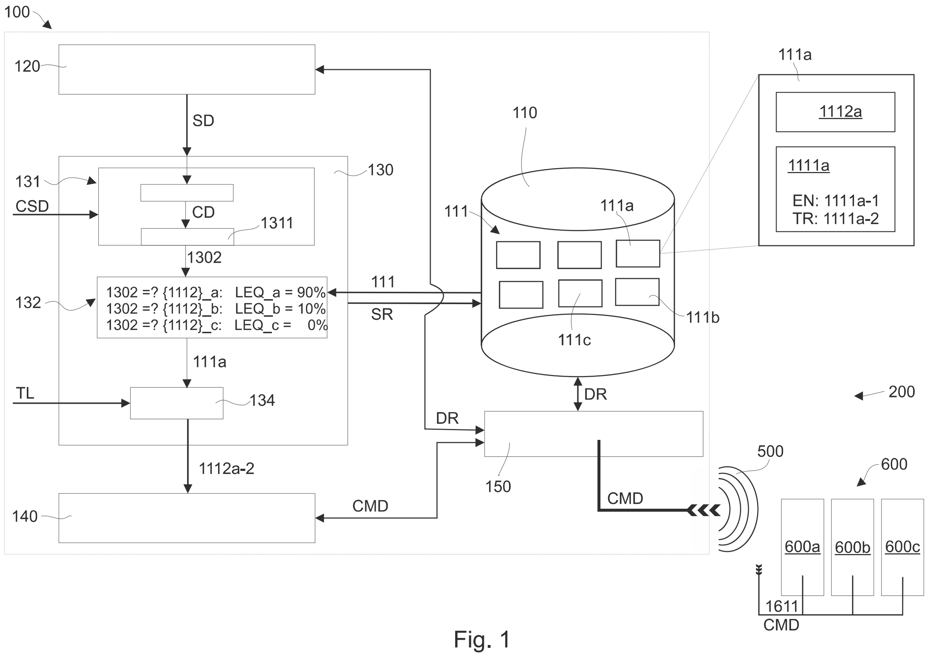

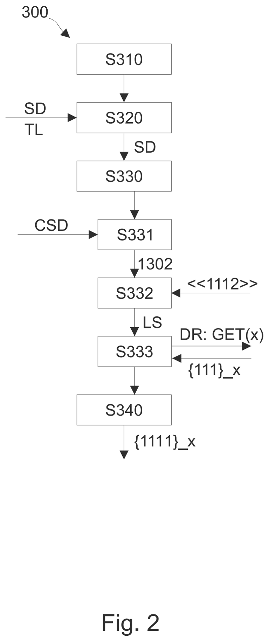

Figures 1 to 4 show different embodiments of different aspects of the present invention.

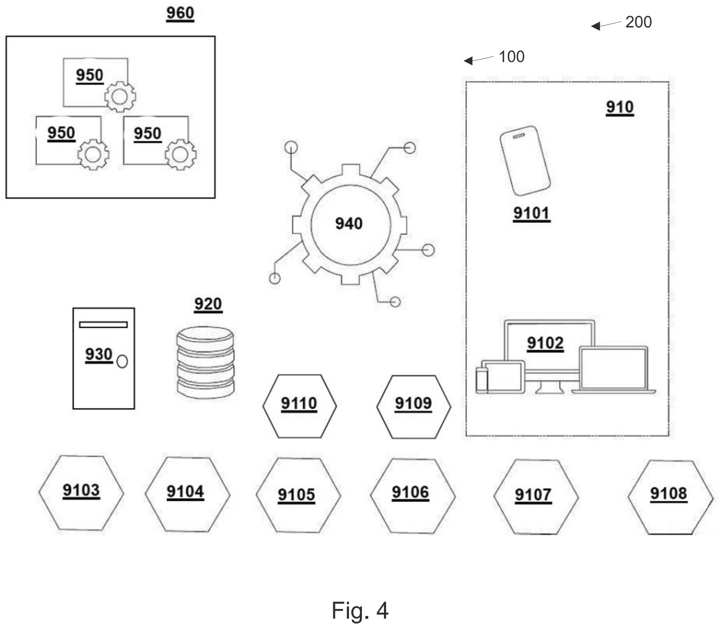

A first aspect of the invention relates to a data processing device 100 for converting data in a crisis situation. Figures 1 and 4 show different embodiments of the data processing device 100. The data processing device 100 may be a mobile device, such as a tablet or a mobile phone.

The data processing device 100 comprises a device database 110, 920. The device database 110, 920 is exemplarily illustrated in Figures 1 and 4.

The device database 110, 920 comprises a plurality of data entries 111. For illustration purposes, three data entries 111a, 111b, 111c are shown in Figure 1. Each of the data entries 111 comprises term data 1111 with at least two corresponding prescribed terms in different languages. This is exemplarily illustrated in Figure 1 in the magnified illustration of data entry 111a, which shows that the term data 1111a includes a term 1111a-1 in English and a term 1111a-2 in Turkish. The two terms 1111a-1 and 1111a-2 correspond to each other. Preferably, the terms of the term data 1111 are equivalent in their definition but different with regards to their language. For example, the term data 1111 may comprise popularised terminology.

Each of the data entries 111 further comprises a prescribed conceptual representation 1112 of the term data 1111. With other words, each of the data entries 111 comprises an abstract description or denomination of the meaning and concept underlying the term data 1111. Preferably, the device database 110 may follow a concept-level approach. Thus, instead of organising the data in the device database 110 according to a term- or language-level structure, the data in the device database 110 may be organised in terms of their underlying concept. As a consequence, the device database 110 can support controlled concept normalisation under crisis-specific constraints. Furthermore, the device database 110 may preferably be compatible for exchanging data in accordance with the TermBase eXchange (TBX) standard. For instance, TBX may be provided as an XML-based standard for exchanging terminology data.

The data entries 111 of the device database 110 may carry information that relates to a specific crisis situation and/or to a specific stage of the crisis situation, such as mitigation, preparedness, response, and recovery. Each of the data entries 111 may comprise one or more additional data. The data entries 111 may comprise data in various formats, such as video data, image data, sound data, and/or text data. Preferably, at least some of the data of each data entry 111 may be matched with the respective prescribed conceptual representation 1112 of the term data 1111.

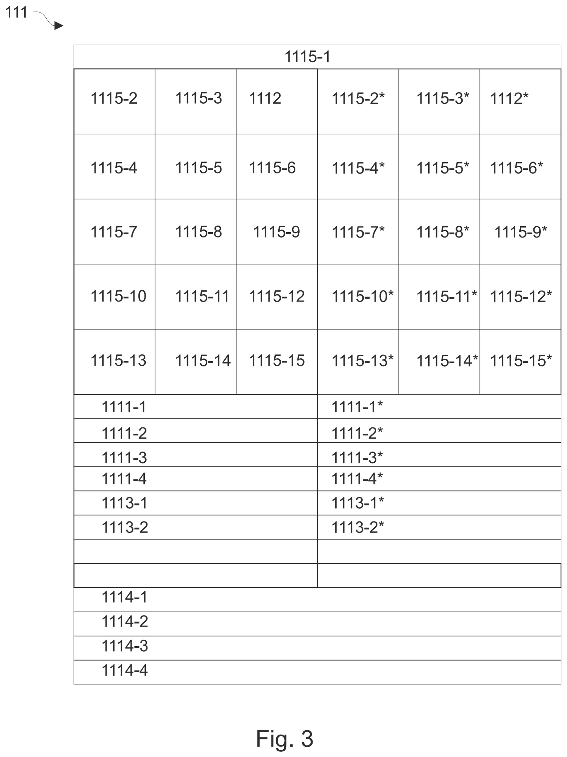

Figure 3 shows an example for one of the data entries 111 and illustrates the underlying data model. Various data may be assigned to each data entry 111 and the data may be provided in two different languages. In Figure 3, corresponding data are indicated by the same reference numeral and including a star-symbol for data provided in the different language.

For example, one or more of the following data may be provided: a concept identifier 1115-1 for uniquely identifying the terminological entity within the device database 110, a language code 1115-2 (ISO 639-3), the prescribed conceptual representation 1112, an information about the type 1115-3 of the prescribed conceptual representation 1112, a compressed form 1115-4 of the prescribed conceptual representation 1112, a concept reference data category 1115-5 identifying the origin of the terminological information, a domain indicator 1115-6 identifying the technical or operational domain to which the prescribed conceptual representation 1112 belongs, a subdomain indicator 1115-7 to the domain indicator 1115-6, orthographical variations 1115-8, an audio recording of pronunciation 1115-9, a definition data category 1115-10 providing a concept-level definition independent of linguistic form, a definition reference 1115-11, equivalents 1115-12 for standardised preferred terms, cross-references data 1115-13, contextual fragments 1115-14, text sources 1115-15 of the contextual fragments 1115-14, terms 1111-1, 1111-2, graphical data 1111-3, such as images, videos, diagrams, or pictograms associated with the prescribed conceptual representation 1112, an illustration reference data category 1111-4, a validation code or reliability indicator indicating a verification status or confidence level 1113-1, usage notes 1113-2, an author of record 1114-1, usage notes 1114-2, a date of record 1114-3, and/or a date of update/modification 1114-4. Naturally, these are only examples. For instance, the data entries 111 may additionally comprise a context data category.

The device database 110 may be designed to be scalable. For instance, the device database 110 may be linguistically scalable by including new entries for different languages. The data in the new additional language (e.g. additional term data 1111) may be added to existing data entries 111. As illustrated by Figure 3, the underlying data model of the device database 110 has a design that allows such additions without having to restructure the device database 110. Furthermore, the device database 110 may be domain-wise scalable. For example, the device database 110 may allow to provide data relevant to more than one specialist domain. As illustrated by Figure 3, the underlying data model of the device database 110 facilitates to provide information about domain-tagged concept hierarchies and cross-domain relationships. Furthermore, the device database 110 may be functionally scalable. For example, the device database 110 may facilitate integration of additional functions, such as semantic search, contextual filtering, AI-assisted retrieval, for instance by utilizing metadata and relational mappings. Moreover, the device database 110 may be user-centrically and support to be used by heterogeneous user groups. As illustrated by Figure 3, the layered data representation of the data entries 111 may facilitate to return term data 1111 depending on user characteristics, such as expert level or layperson level. Hence, the device database 110 may be configured to selectively return expert terminology or popularised terminology. Furthermore, the device database 110 may be technologically scalable by allowing deployment in distributed or high-volume environments. As illustrated by Figure 3, the underlying data model allows to scale the device database 110. For instance, graph-based or NoSQL structures may be used for the device database 110.

The data processing device 100 further comprises a data entry interface 120 for entering search data SD relating to at least one of the data entries 111. This is exemplarily illustrated in Figure 1. In the example of Figure 4, the data entry interface 120 is provided as a term bank application 910. The data entry interface 120 may be a browser, a search mask or a graphical user interface. Alternatively or additionally, the data entry interface 120 may be a microphone or camera. The data entry interface 120 may be configured to enter the search data SD in at least one of a plurality of data formats, such as video data, image data, sound data, and/or text data. For example, the search data SD may be entered by selecting relevant language pairs for one or more search terms and target terms. For instance, the user may enter the term "tent" and select "English" as the source language. The user may then select a target language, for instance "Turkish", for converting the search data SD to the corresponding term in Turkish. The data entry interface 120 may be separate from or integral with the device database 110. The data entry interface 120 may integrate auto-completion for text-based queries, for instance a drop-down menu may be shown. Alternatively or additionally, the data entry interface 120 may integrate text-to-speech (TTS), speech-to-text/automatic speech recognition (STT/ASR), and speech-to-speech (S2S) functionalities. By combining STT and TTS, the data entry interface 120 may enable seamless multimodal interaction of the data processing device 100 with its user.

The data processing device 100 may further comprise a communication network interface 150 for exchanging communication data CMD over a communication network 500. In Figure 1, the communication network interface 150 is communicatively coupled to the data entry interface 120 and the device database 110. For example, the communication network interface 150 may be a satellite communication port, an internet communication port or Bluetooth communication port. The communication network 500 may be a wired or wireless connection.

The data entry interface 120 may be configured to transmit a data request DR to at least one external resource 600 via the communication network interface 150. The data request DR may be based on the entered search data SD. The external resource 600 may be one or more external terminology databases 600a, 600b, 600c. For example, the external resource 600 may be a database provided by official bodies, such as United Nations. Such configurations may allow the data processing device 100 to interact with multiple heterogeneous external terminology databases through a single, coherent retrieval layer. Furthermore, it is possible to provide an online illustration search browser that allows systematic retrieval and selection of contextually relevant illustration types and perspectives from internet-based sources to support accurate concept visualisation and terminological disambiguation. In Figure 4, this is exemplarily illustrated by web browser 9102.

Alternatively or additionally, it is also conceivable that the device database 110 is configured to transmit such data request DR to the external resources 600 and to receive external term data 1611 for verifying, supplementing and/or consolidating the term data 111 stored in the device database 110. This allows the device database 110 to be adaptable and interoperable and further facilitates a configuration where semantic technologies (e.g. SKOS or ontologies) may be integrated in the device database 110.

The data processing device 100 comprises further a data conversion module 130 for converting the search data SD into a corresponding term included in the data entries 111. The data conversion module 130 may be part of the device database 110 or of the data entry interface 120. Alternatively, the data conversion module 130 may be an independent part of the data processing device 100. This is exemplarily illustrated in Figure 1. The data conversion module 130 may be provided as software component or application on the data processing device 100.

The data conversion module 130 is configured to determine a conceptual representation 1302 of the entered search data SD based on the entered search data SD.

For this purpose, the data processing device 100 or the data conversion module 130 may comprise a content extraction section 131 which is configured to identify and extract one or more content components from the entered search data SD and to provide the content components as content data CD. This is exemplarily illustrated in Figure 1. For this, the content extraction section 131 may be configured to apply techniques of image segmentation and/or semantic parsing for identifying and extracting the content components for the content data CD. It is then possible to derive the conceptual representation 1302 of the entered search data SD based on the content data CD. Specifically, the conceptual representation 1302 of the entered search data SD may be determined by mapping the content components to one or more of the prescribed conceptual representations 1112 and by determining a level of equivalence LEQ between at least parts of the content data CD and at least some of the data entries 111.

In this regard, it is also conceivable to provide the data processing device 100 or the data conversion module 130 with an artificial intelligence section 1311. This is exemplarily illustrated in Figure 1. The artificial intelligence section 1311 may comprise an input for receiving the search data SD and an output for outputting at least one determined conceptual representation 1302. The artificial intelligence section 1311 may be configured to dynamically map the search data SD to the prescribed conceptual representations 1112 in the device database 110. For this, the artificial intelligence section 1311 may comprise an artificial intelligence model trained to associate the search data SD with one or more prescribed conceptual representations 1112 from the device database 110. The training data and the prescribed conceptual representations 1112 may be based on data received from one or more reference databases, such as the external resources 600.

The conceptual representation 1302 of the entered search data SD may be determined more accurately if the determination is based on crisis situation data CSD that relates to contextual constraints defined by a specific crisis situation. For instance, a specific stage of the crisis situation, such as mitigation, preparedness, response, and recovery, may require different terminology, such as different equipment, problems, risks and surroundings. Including such information in the determination process in the form of the crisis situation data CSD allows to consider these circumstances. Figure 4 highlights this by showing different databases for different applications, such as a pharmacological database module 9104, a disaster risk information module 9106, a missing persons and missing pets module 9110, and a military operations module. In addition, it is also conceivable that the device database 110 may limit access to the data entries 111 to a selected group of the data entries 111 that corresponds to the contextual constrains defined by the crisis situation data CSD. For instance, terminology relevant to medical applications is only used if the crisis situation data CSD comprises a reference to a medical use case.

Preferably, the data conversion module 130 may be further configured to determine at least one validation or reliability indicator for indicating a verification status, authority level, or source reliability associated with a determined conceptual representation 1302 of the entered search data SD. This indicator can be presented to a user of the data processing device 100 to assess the reliability level of the shown information.

The data conversion module 130 is further configured to retrieve at least one of the data entries 111 from the device database 110 based on an at least partial equivalence LEQ between the determined conceptual representation 1302 of the search data SD and the prescribed conceptual representation 1112 of the at least one of the data entries 111. This is exemplarily illustrated in Figure 1. There, an equivalence level determination and data retrieval module 132 is shown. A search request SR is sent to the device database 110 and data entries 111 are returned. For instance, the module 132 may request for all entries relating to the prescribed conceptual representation 1112 and compare the values to the determined conceptual representation 1302. A level of equivalence LEQ may be determined and based on the level of equivalence LEQ a data entry 111a may be selected.

The data processing device 100 comprises further a data output interface 140 for outputting the term data 1111 of the at least one retrieved data entry 111 in a language TL. The data output interface 140 may be configured to present the retrieved term data 1111 in various output modes, including a presentation as video, image, sound and/or text.

A language selection module 134 may be provided to select the term 1112a-2 in the target language TL that was specified by the user. The language selection module 134 may be part of the data output interface 140, of the device database 110 or the data conversion module 130. Alternatively, the language selection module 134 may be separate from any of these.

In Figure 1, the communication network interface 150 is also communicatively coupled to the data output interface 140 to receive and display external term data 1611 from the external resource 600. For example, the data output interface 140 may facilitate to display results of the external databases 600 in the same format as shown in their native user interfaces. For instance, the WIPO Pearl terminology portal may be accessed by making a data request DR from the data entry interface 120 and displaying the results within the graphical user interface of the WIPO pearl terminology portal. This may include the results of a concept map that is offered by the WIPO Pearl terminology portal. Equally, it may be possible to search the concept map offered by the WIPO Pearl terminology portal via the data entry interface 120. In addition, it may be also possible to visualize the hierarchical structure of terms and concepts as provided in the external data bases 600 and/or the device database 110 through the data output interface 140. Naturally, the WIPO Pearl terminology portal is only one example of many and other external databases 600 may be accessed, searched and/or integrated in equal or similar ways.

Preferably, the data processing device 100 may further comprise an AI-based translation and interpreting engine (not shown in the figures), which may be used, for example, to conduct offline and/or online translation or interpretation of the search data SD or other data inputs. The AI-based translation and interpreting engine may incorporate optical character recognition (OCR) and text-to-text (T2T), text-to-speech (TTS), speech-to-text (STT), and speech-to-speech (S2S) functionalities. The AI-based translation and interpreting engine may be designed to be constrained by the data contained in the device database 110. For example, the AI-based translation and interpreting engine may be trained and fine-tuned on curated electronic texts selected and validated by subject-matter experts within the relevant domain-specific fields. Preferably, the texts for training may have also served as source for the data entries 111 of the device database 110. For example, the data entries 111 of the device database 110 may be provided from an initial term extraction process, in which high-frequency and domain-relevant terms are identify and assessed. The trained AI-based translation and interpreting engine may operate by dynamically returning the authorised terminological data 1111, entries, definitions, and/or popularised terms stored in the data entries 111 of the device database 110. As a result, the outputs of the AI-based translation and interpreting engine can be terminologically normalised, semantically disambiguated, and can be made contextually consistent, rather than being produced on the basis of statistically inferred language patterns as found with common translation tools.

A further aspect of the present invention relates to a data processing system 200 for converting data in a crisis situation. The data processing system 200 comprises the above described data processing device 100 and at least one of the external resources 600. The data processing device 100 and the external resources 600 are communicatively coupled via the communication network. The data processing system 200 is exemplarily illustrated in Figures 1 and 4.

A further aspect of the present invention relates to a data processing method 300 for converting data in a crisis situation. The data processing method 300 comprises a step S310, in which the device database 110 is provided. In step S320, the search data SD is entered and in step S330 the search data SD is converted into a corresponding term. Step 330 comprises a number of substeps, such as step S331 of determining the conceptual representation 1302 of the entered search data SD based on the entered search data SD. Furthermore, in step S332 an equivalence LEQ between the determined conceptual representation 1302 of the search data SD and the prescribed conceptual representation 1112 of at least some of the data entries 111 is determined. In step S333, at least one of the data entries 111, for which at least partial equivalence LEQ was determined, is retrieved from the device database 110. In step S340, the term data 1111 of the at least one retrieved data entry 111 is outputted in at least one of the languages TL.

Figure 4 is another exemplary representative view of the data processing system 200. In the following, the data processing system 200 is referred to as term bank system 200.

The following describes the term bank system 200 of Figure 4 and accompanying modules with examples that facilitate a better understanding of the subject, without imposing any limiting effects to this specific embodiment. Figure 4 provides a schematic representation of the technological infrastructure of the term bank system 200.

In Figure 4, the device database 920 may be manually or automatically populated with term data 1111 related to various crisis situations, for example via a main API 940 that may collect data from open sources, such as the external resources 600.

The term bank system 200 may establish a crisis portal. This crisis portal may be downloaded onto a smartphone for use during crises and features a meta-search engine that scans both its proprietary term bank, i.e. the device database 920, and global term banks. For this, a term bank API 950 may be provided. The term bank API 950 may integrate online and offline term bank platforms, thereby bringing together open and closed-source term bank platforms and facilitate their access via a meta-search engine 960.

The data from these sources may be stored as data entries 111 in the device database 920. The meta-search engine 960 may scan the APIs 950 of existing online term banks. All term data 1111 within the device database 920 may be processed by a server 930 and may be made available to users via the term bank applications 910. Backups of both the device database 920 and the server 930 may be maintained, ensuring online and offline access to the data stored in the device database 920 during crisis situations.

The term bank application 910 may include a mobile application 9101 accessible via smart devices and a web portal 9102 accessible via an internet browser. The term bank applications 910 in the invention may contain sub-applications, including a visual dictionary module 9103, a pharmacological database module 9104, an automatic translation and interpretating module 9105, a disaster risk information module 9106, a map module 9107, a live location sharing module 9108, an instant messaging module 9109, a missing persons and missing pets module 9110, and a military operations module.

Like the data entry interface 120, the visual dictionary module 9103 may allow users to search for terms using images or by scanning an object through the application itself. Searching and identifying unknown terms via text input can be challenging for users. This sub-module or application facilitates searching via images, enhancing users' ability to access terms.

The pharmacological database module 9104 may be a valuable resource for providing drug information, serving as a fundamental tool not only for qualified communicators such as crisis translators and interpreters but also for medical professionals, including paramedics, doctors, and nurses. The pharmacological database module 9104 may facilitate the search for equivalents and alternatives of specific drugs, ensuring accurate and reliable information. These data may be retrieved from multiple open and closed databases via the main API 940.

The automatic and Al-integrated automatic translation and interpreting module 9105 may be designed to enhance communication during crises. By being integrated with the term bank application 910, this module 9105 aims to provide more accurate and efficient translation and interpreting outputs. It may feature Optical Character Recognition (OCR) capabilities for scanning handwritten and printed documents. This function may serve as the foundation for text-to-text and text-to-speech AI/machine translation processes. Additionally, the automatic translation and interpreting module 9105 may include instant AI/machine translation output with voice-enabled features to improve real-time communication. Similarly, also these capabilities and functionalities may be integrated or provided in the data entry interface 120.

The disaster risk information module 9106 may provide up-to-date information on various human-made and natural disasters, delivering resources and knowledge related to disaster psychology, search and rescue equipment, disaster risk, crisis and resilience management, emergency and disaster management processes.

The map module 9107 may offer an integrated map accessible both online and offline, providing navigation support to users during crisis situations.

The live location sharing module 9108 may allow users to share their location with institutions, rescue teams, or their close contacts during emergencies.

The instant messaging module 9109 may provide a real-time instant messaging platform to facilitate effective communication and information exchange in crisis situations. The instant messaging module 9109 may act as an additional tool to enhance collaboration and ensure an effective crisis response. This module 9109 may facilitate real-time communication among team members, supporting them in making informed decisions and adapting their response strategies to evolving situations. Similarly, also these capabilities and functionalities may be integrated or provided in the data entry interface 120.

The missing persons and missing pets module 9110 may serve as a platform for locating missing and found individuals and pets in disaster areas. This module 9110 may be designed to collect and share information about missing persons and pets, as well as those who have found them.

The military operations module may be a module designed to facilitate multilingual communication among international teams in coordinated field operations using AI translation technologies. By integrating stored military terminology within the term bank application 910, accurate translation outputs may be ensured.

The visual dictionary module 9103, pharmacological database module 9104, automatic translation and interpretating module 9105, disaster risk information module 9106, map module 9107, live location sharing module 9108, instant messaging module 9109, missing persons and missing pets module 9110, and military operations module may be provided as optional features, meaning that one, several, or all of them may be included.

Further advantages may be described as follows:
A multilingual and concept-based term bank system 200 may be used online or offline via a mobile application or website. For this, a data model may be developed, consisting of data categories tailored to specific needs.

Furthermore, the term bank system 200 may be provided to provide adequate terminological support in any crisis environment, to function online and offline in all widely and rarely spoken languages and to collect terms manually or through APls from open-source databases and other term banks.

In addition, the term bank system 200 may allow searching for terms using images.

Furthermore, the term bank system 200 may be capable of processing input and output in various formats, including speech-to-text, text-to-text, text-to-speech, and speech-to-speech.

Additionally, an automatic (written and spoken) translation/interpreting system may be integrated into the term bank system 200 for operating offline and/or online.

Moreover, the term bank system 200 may be provided to store all kinds of information related to disaster risks in its database.

The term bank system 200 may be provided to feature mapping that directs people during crises, that allows real-time location sharing and that facilitates instant messaging for communication with individuals and organisations.

Furthermore, the term bank system 200 may be provided with a pharmacological database that lists essential medications and their country-specific equivalents during crises.

The above description of the embodiments describes the present invention exclusively in the context of examples. Of course, individual features of the embodiments can be freely combined with each other, provided that this is technically sensible, without departing from the scope of the present invention.

### Reference numerals

- 100: Data processing device
- 110: Device database
- 111, 111a to 111c: Data entries
- 1111a-1, 1111a-2: Corresponding terms in English and Turkish
- 11112: Prescribed conceptual representation
- 1113-1115: Additional data of a data entry
- 120: Data entry interface
- 130: Data conversion module
- 131: Content extraction section
- 1311: Artificial intelligence section
- 132: Equivalence level determination and data retrieval module
- 1302: Conceptual representation
- 134: language selection module
- 150: Communication network interface
- 1611: External term data
- 200: Data processing system
- 300: Data processing method
- S310-S340: Method steps
- 500: Communication network
- 600: External resources
- CD: Content data
- CMD: Communication data
- CSD: Crisis situation data
- DR: Data Request
- SD: Search data
- SR: Search Request
- TL: target language
- 910: Term bank application
- 9101: Mobile application
- 9102: Web portal
- 9103: Visual dictionaries module
- 9104: Pharmacological database module
- 9105: Automatic translation and interpreting module
- 9106: Disaster risk information module
- 9107: Map module
- 9108: Live location sharing module
- 9109: Instant messaging module
- 9110: Missing persons and missing pets module
- 920: Device database
- 930: Server
- 940: Main API
- 950: Term banks APl's
- 960: Meta-search engine

## Claims

1. Data processing device (100) for converting data in a crisis situation, comprising
- a device database (110) with data entries (111), each of the data entries (111) comprising
o term data (1111) with at least two corresponding prescribed terms in different languages, and
o a prescribed conceptual representation (1112) of the term data (1111),
- a data entry interface (120) for entering search data (SD) relating to at least one of the data entries (111),
- a data conversion module (130) for converting the search data (SD) into a corresponding term, wherein the data conversion module (130) is configured to
o determine a conceptual representation (1302) of the entered search data (SD) based on the entered search data (SD), and
o retrieve at least one of the data entries (111) from the device database (110) based on an at least partial equivalence (LEQ) between the determined conceptual representation (1302) of the search data (SD) and the prescribed conceptual representation (1112) of the at least one of the data entries (111), and
- a data output interface (140) for outputting the term data (1111) of the at least one retrieved data entry (111) in at least one of the languages (TL).

2. Data processing device (100) according to claim 1, wherein the data entries (111) of the device database (110) relate to a specific crisis situation, and/or
wherein the data entries (111) further comprise video data, image data, sound data, and/or
text data, which is mapped to the respective prescribed conceptual representation (1112) of the term data (1111).

3. Data processing device (100) according to any one of claims 1 to 2, wherein the data entry interface (120) is configured to enter the search data (SD) in at least one of a plurality of data formats, wherein preferably the search data (SD) comprises video data, image data, sound data, and/or text data.

4. Data processing device (100) according to any one of claims 1 to 3, further comprising
- a content extraction section (131) which is configured to identify and extract one or more content components from the entered search data (SD) and to provide the content components as content data (CD), wherein preferably the content extraction section (131) is configured to apply techniques of image segmentation and/or semantic parsing for identifying and extracting the content components for the content data (CD),
wherein the conceptual representation (1302) of the entered search data (SD) is determined based on the content data (CD) from the search data (SD).

5. Data processing device (100) according to claim 4, wherein the conceptual representation of the entered search data (SD) is determined by mapping the content components to one or more of the prescribed conceptual representations (1112), wherein the mapping depends on an equivalence (LEQ) between at least parts of the content data (CD) and at least some of the data entries (111).

6. Data processing device (100) according to any one of claims 1 to 5, wherein the data conversion module (130) comprises a artificial intelligence section (1311), which comprises an input for receiving the search data (SD) and which comprises an output for outputting at least one determined conceptual representation (1302), wherein the artificial intelligence section (1311) is configured to dynamically map the search data (SD) to the prescribed conceptual representations (1112), and wherein the artificial intelligence section (1311) comprises a artificial intelligence model trained to associate the search data (SD) with one or more prescribed conceptual representations (1112) from the device database (110), wherein the prescribed conceptual representations (1112) are based on data received from one or more reference databases.

7. Data processing device (100) according to any one of claims 1 to 6, wherein the conceptual representation (1302) of the entered search data (SD) is further determined based on crisis situation data (CSD) that relates to contextual constraints defined by a specific crisis situation.

8. Data processing device (100) according to any one of claims 1 to 7, wherein the data output interface (140) is configured to present the retrieved term data (1111) in at least one of a plurality of output modes, wherein preferably the output modes comprise video, image, sound and/or text.

9. Data processing device (100) according to any one of claims 1 to 8, further comprising a communication network interface (150) for exchanging communication data (CMD) over a communication network (500), wherein the communication network interface (150) is communicatively coupled to the data entry interface (120), the data output interface (140), and/or the device database (110).

10. Data processing device (100) according to claim 9, wherein the data entry interface (120) is further configured to transmit a data request (DR) to at least one external resource (600) via the communication network interface (150), wherein the data request (DR) is based on the entered search data (SD), and wherein the data output interface (140) is configured to receive external term data (1611) from the at least one external resource (600), wherein the external term data (1611) relate to the data request (DR).

11. Data processing device (100) according to claim 9 or claim 10, wherein the device database (110) is configured to transmit a data request (DR) to external resources (600), which is based on the entered search data (SD), and to receive external term data (1611) for verifying, supplementing and/or consolidating the term data (1111) stored in the device database (110).

12. Data processing system (200) for converting data in a crisis situation, comprising
- the data processing device (100) according to any one of claims 9 to 11, and
- at least one or more external resources (600), which are communicatively coupled to the communication network interface (150) of the data processing device (100) via a communication network.

13. Data processing method (300) for converting data in a crisis situation, comprising the following steps:
- providing a device database (110) with data entries (111), each of the data entries (111) comprising term data (1111) with at least two corresponding prescribed terms in different languages, and a prescribed conceptual representation (1112) of the term data (1111),
- entering search data (SD) relating to at least one of the data entries (111),
- converting the search data (SD) into a corresponding term, comprising the steps of:
o determining a conceptual representation (1302) of the entered search data (SD) based on the entered search data (SD),
o determining an equivalence (LEQ) between the determined conceptual representation (1302) of the search data (SD) and the prescribed conceptual representation (1112) of at least some of the data entries (111), and
o retrieving at least one of the data entries (111) from the device database (110) for which at least partial equivalence (LEQ) was determined, and
- outputting the term data (1111) of the at least one retrieved data entry (111) in at least one of the languages (TL).

14. Data processing method according to claim 13, further comprising steps to perform the functions of the data processing device (100) according to any one of claims 1 to 11.

15. Computer program product comprising instructions which, when the program is executed by a computer, cause the computer to carry out the steps of the data processing method of anyone of claims 13 or 14.
